(19) Europäisches Patentamt
European Patent Office
Office européen des brevets

(11) **EP 2 212 195 B1**

(12) **FASCICULE DE BREVET EUROPEEN**

(45) Date de publication et mention
de la délivrance du brevet:
**28.08.2013 Bulletin 2013/35**

(21) Numéro de dépôt: **08857670.7**

(22) Date de dépôt: **27.11.2008**

(51) Int Cl.:
***B64C 13/28*** *(2006.01)*   ***F16H 25/20*** *(2006.01)*
***H02K 7/06*** *(2006.01)*   ***H02K 11/00*** *(2006.01)*

(86) Numéro de dépôt international:
**PCT/FR2008/052143**

(87) Numéro de publication internationale:
**WO 2009/071848 (11.06.2009 Gazette 2009/24)**

(54) **Procédé de surveillance du rendement d'un actionneur électromécanique du type rotolinéaire**

Verfahren zur Überwachung der Leistung eines elektromechanischen Dreh-/Linearaktuators

Method for monitoring the output of an electromechanical actuator of the rotary-linear type

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.11.2007 FR 0708401**

(43) Date de publication de la demande:
**04.08.2010 Bulletin 2010/31**

(73) Titulaire: **SAGEM Défense Sécurité**
**75015 Paris (FR)**

(72) Inventeurs:
• **HORS, Daniel**
**F-75015 Paris (FR)**
• **LEPORE, Francis**
**F-75015 Paris (FR)**
• **WEIBEL, Jean-François**
**F-75015 Paris (FR)**

(74) Mandataire: **Cabinet Plasseraud**
**52, rue de la Victoire**
**75440 Paris Cedex 09 (FR)**

(56) Documents cités:
**EP-A- 1 793 477      WO-A-2005/024273**
**WO-A-2007/099333      US-A1- 2005 103 928**

**Description**

La présente invention concerne d'une façon générale le domaine des actionneurs électromécaniques du type rotolinéaire, et plus précisément elle concerne le domaine de la surveillance des actionneurs électromécaniques du type rotolinéaire aux fins de détection d'un grippage graduel dudit actionneur, de manière à fournir des éléments d'information permettant de déterminer leur maintien en service ou leur remplacement.

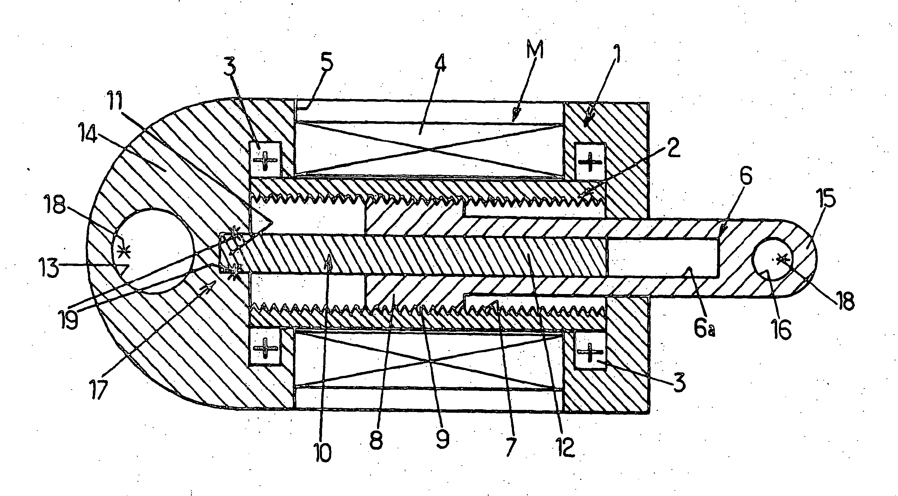

La figure unique du dessin annexé donne une représentation très schématique de la configuration générale d'un exemple d'actionneur électromécanique du type rotolinéaire auquel s'intéresse l'invention. On rappellera succinctement qu'un tel actionneur comprend :

- un carter 1 ;
- des moyens moteurs M électriques d'entraînement en rotation comportant au moins un enroulement inducteur ; et
- au moins un écrou 2 supporté à rotation dans des paliers 3 dudit carter 1 et entraîné en rotation par lesdits moyens moteurs M.

Dans l'exemple plus spécifiquement représenté qui correspond à un actionneur rotolinéaire du type à entraînement direct :

- les moyens moteurs M électriques, qui sont de type électromagnétique, comprennent des bobinages électriques ou enroulements inducteurs 4 qui sont agencés en couronne et sont supportés notamment dans au moins une encoche 5 prévue dans le carter 1 ou dans une carcasse solidaire de celui-ci, l'ensemble constituant un stator, et qui sont propres à générer un champ tournant entraînant en rotation un rotor disposé coaxialement à l'intérieur de la couronne des bobinages 4 ; et
- le au moins un écrou 2 est disposé coaxialement à l'intérieur de la couronne de bobinages 4 en constituant le rotor précité, cet écrou 2 pouvant être équipé d'aimants, typiquement d'aimants permanents, de manière à être entraîné en rotation dans les paliers 3 par le champ tournant.

En outre, l'actionneur comprend :

- au moins une tige d'actionneur 6 disposée sensiblement coaxialement à l'écrou 2, ledit écrou 2 et ladite tige d'actionneur 6 étant accouplés en rotation par des moyens d'engrènement hélicoïdaux axiaux ; à cet effet, comme montré sur la figure, l'écrou 2 se présente sous la forme générale d'un élément tubulaire dont la face intérieure est, sur une partie au moins de sa longueur, pourvue d'au moins un filetage 7 hélicoïdal, tandis que la tige d'actionneur 6 possède une extrémité intérieure à l'écrou 2, qui peut être une portion 8 élargie comme illustré, qui est extérieurement pourvue d'un filetage 9 hélicoïdal ;
- des moyens 17 de blocage en rotation de la tige d'actionneur 6 par rapport au carter 1 de manière que la rotation de l'écrou 2 se traduise par un déplacement linéaire de la tige d'actionneur 6 ; lesdits moyens de blocage en rotation peuvent de façon simple être constitués par une clavette 10 disposée sensiblement coaxialement à l'écrou 2 et d'étendue axiale, ladite clavette 10 ayant une section non circulaire (par exemple polygonale, notamment carrée) et ayant une extrémité 11 encastrée dans le carter de façon fixe et son autre extrémité 12 engagée à libre coulissement dans un alésage 6a axial de la tige d'actionneur 6 ;
- un moyen prévu sur le carter 1 pour la fixation dudit carter 1 à un organe fixe ou déplaçable ; par exemple une (ou plusieurs) partie du carter 1, telle que notamment l'extrémité 14 du carter 1 opposée à la partie émergeante de la tige d'actionneur 6 et qui peut par exemple être conformée en chape, est munie d'un oeillet 13 propre à recevoir un élément d'accouplement ;
- un moyen prévu sur la tige d'actionneur 6 pour la fixation de l'extrémité 15 libre de ladite tige d'actionneur 6 à un organe respectivement déplaçable ou fixe ; une solution simple consiste en ce que ladite extrémité 15 de la tige d'actionneur 6 soit munie d'un oeillet 16 propre à recevoir un élément d'accouplement.

Bien entendu, la description qui précède n'est donnée qu'à titre indicatif pour fixer les idées, étant entendu que de nombreux modes de réalisation d'actionneurs de type rotolinéaire existent ou peuvent être envisagés ; en particulier, un actionneur double peut être dérivé de la structure précédemment décrite en prévoyant, dans la couronne des bobinages 4, deux écrous 2 disposés bout à bout et ayant des filetages respectifs à pas inverses ou un seul écrou à deux filetages successifs à pas inverses, avec lesquels engrènent respectivement deux tiges d'actionneur opposées. Au surplus, le terme filetage doit être compris dans un sens large, comme pouvant désigner aussi bien une vis classique trapézoïdale qu'une vis à billes ou qu'une vis à rouleaux.

Les actionneurs électromécaniques du type rotolinéaire trouvent aujourd'hui une application notamment (bien que non exclusivement) dans l'équipement des avions modernes dits « tout électrique ». La conception d'un avion « tout électrique » s'accompagne de la suppression des réseaux et commandes hydrauliques employés jusqu'alors et leur remplacement par des solutions électromécaniques mettant en jeu des actionneurs électromécaniques et en particulier des actionneurs électromécaniques du type rotolinéaire. Les actionneurs électromécaniques du type rotolinéaire utilisés dans ce contexte peuvent servir, par exemple, à l'entraînement des plans mobiles (volets, gouvernes, ...) de l'avion.

Bien entendu, les solutions électromécaniques ainsi mises en place doivent offrir un degré de sûreté de fonctionnement au moins égal à celui des solutions hydrauliques antérieures. L'analyse de sûreté de fonctionnement met en évidence les défaillances suivantes :

- rupture de la liaison mécanique,
- embarquement de la surface,
- grippage de la surface.

Les deux premières défaillances citées ne sont pas caractéristiques des seuls actionneurs électromécaniques du type rotolinéaire et peuvent survenir avec d'autres solutions (par exemple les solutions hydrauliques antérieures). On connaît donc des solutions pour traiter ces problèmes, solutions qui peuvent être reconduites dans le cas des actionneurs électromécaniques du type rotolinéaire.

Par contre, la troisième défaillance citée (grippage de la surface) est caractéristique des actionneurs électromécaniques du type rotolinéaire, et il est essentiel de prévenir un grippage d'un tel actionneur, ou à tout le moins d'être informé de son occurrence.

L'invention se fonde sur le fait qu'un grippage n'apparaît pas de façon soudaine et qu'il se traduit par une dégradation graduelle des performances, et donc une détérioration des performances, de l'actionneur. Aussi, l'invention se fonde sur une détection des signes avant-coureurs d'un grippage.

A contrario, cela sous-entend que, si un grippage brutal de l'actionneur est possible, les moyens proposés dans le cadre de la présente invention seront inefficaces pour procurer une quelconque alerte en préalable à l'occurrence du grippage brutal.

C'est dans ce contexte que l'invention a pour but de proposer des moyens appropriés à prévenir d'un grippage graduel, et cela de façon exclusive, d'un actionneur électromécanique du type rotolinéaire, étant entendu au surplus que l'invention vise uniquement à proposer des moyens propres à fournir des informations sur l'état de l'actionneur électromécanique du type rotolinéaire, sans aller jusqu'aux étapes ultérieures de détermination de l'opportunité du maintien en place ou du remplacement dudit actionneur qui sont, quant à elles, laissées à l'initiative des utilisateurs.

A ces fins, l'invention concerne un procédé de surveillance du rendement d'un actionneur électromécanique du type rotolinéaire aux fins de détection d'un grippage graduel dudit actionneur, ledit actionneur comprenant :

- un carter,
- des moyens moteurs électriques d'entraînement en rotation, incluant au moins un enroulement inducteur,
- au moins un écrou supporté à rotation dans des paliers dudit carter et entraîné en rotation par lesdits moyens moteurs,
- au moins une tige d'actionneur disposée coaxialement à l'écrou, ledit écrou et ladite tige d'actionneur étant accouplés en rotation par des moyens d'engrènement hélicoïdaux axiaux,
- des moyens de blocage en rotation de la tige d'actionneur par rapport au carter de manière que la rotation de l'écrou se traduise par un déplacement linéaire de la tige d'actionneur,
- un moyen prévu sur le carter pour la fixation du carter à un organe fixe ou déplaçable, et
- un moyen prévu sur la tige d'actionneur pour la fixation de l'extrémité libre de la tige d'actionneur à un organe respectivement déplaçable ou fixe,

ce procédé comprenant les étapes suivantes :

a)

- on mesure l'intensité du courant électrique d'alimentation de l'enroulement inducteur, ladite intensité étant représentative du couple moteur, et
- on mesure un effort représentatif de l'effort axial auquel est soumise la tige d'actionneur,

b) on calcule, à partir de ces mesures, le rapport [effort axial auquel est soumise la tige d'actionneur / couple moteur] qui est représentatif du rendement global de l'actionneur et représentatif de l'état présent de l'actionneur,

c) puis on génère une évaluation de l'état de santé présent de l'actionneur qui est basée sur l'état présent de l'actionneur et éventuellement sur des états antérieurs de l'actionneur tenus en mémoire et/ou sur des paramètres extérieurs.

Un tel procédé est connu par WO 2005/024273.

Selon l'invention, il est possible d'améliorer la connaissance sur l'état de l'actionneur en obtenant des informations redondantes grâce à des mesures et calculs additionnels.

A cet effet, l'invention propose un procédé du type présenté ci-dessus et connu par WO 2005/024273, et qui se caractérise en ce qu'à l'étape a) on mesure en outre un couple représentatif du couple d'antirotation entre lesdits moyens de blocage en rotation et ladite tige d'actionneur, et en ce qu'à l'étape b) on calcule en outre le rapport [couple d'antirotation / couple moteur], qui est représentatif de l'état des paliers de montage à rotation dudit écrou sur le carter, et/ou le rapport [couple d'antirotation / effort axial auquel est soumise la tige d'actionneur], qui est représentatif de l'état des moyens d'engrènement hélicoïdaux axiaux coopérants respectifs dudit écrou et de ladite tige d'actionneur.

Les moyens proposés par l'invention offrent l'avantage de permettre une surveillance précise de l'état de santé de l'actionneur, et donc de surveiller l'évolution d'un grippage graduel dès les premiers indices d'occurrence de celui-ci.

Les moyens proposés par l'invention offrent également l'avantage supplémentaire d'une très grande souplesse de mise en oeuvre : notamment, les diverses étapes conduisant au diagnostic de santé de l'actionneur peuvent être menées automatiquement ou déclenchées à la demande lors de contrôles ; elles peuvent aussi être faites automatiquement en permanence (l'actionneur étant sous surveillance constante individuellement) ou cycliquement (par exemple tous les actionneurs d'un appareil tel qu'un avion ou tous les actionneurs d'un groupe d'actionneurs sont testés successivement de façon cyclique).

Encore un autre avantage de la solution proposée par l'invention réside dans le fait que l'exploitation des informations ainsi obtenues reste du domaine du libre arbitre de l'utilisateur de l'actionneur, de sorte que des utilisateurs divers restent libres de donner des suites différentes face à un même état de santé détecté sur l'actionneur.

L'invention sera mieux comprise à la lecture de la description détaillée qui suit de certains modes de mise en oeuvre préférés du procédé de l'invention qui sont donnés uniquement à titre d'exemples nullement limitatifs.

Selon le procédé conforme à l'invention, une étape a) consiste :

- à mesurer l'intensité du courant électrique d'alimentation du ou des enroulements inducteurs ou bobinages 2, ladite intensité étant représentative du couple moteur ; cette information est déjà exploitée par ailleurs, notamment dans la loi de commande de l'actionneur, et est donc disponible sans qu'il soit nécessaire de mettre en place un matériel capteur particulier ni de procéder à une mesure spécifique ; et

- à mesurer un effort représentatif de l'effort axial auquel est soumise la tige d'actionneur 6 ; cette mesure peut être effectuée soit au niveau de l'accouplement du carter 1 (en particulier au niveau de son oeillet 13 d'accouplement) à un organe fixe ou déplaçable, soit au niveau de l'accouplement de l'extrémité 15 libre (en particulier de son oeillet 16 d'accouplement) de la tige d'actionneur 6 à un organe respectivement déplaçable ou fixe ; à cet effet, on peut par exemple mettre en oeuvre des jauges de contrainte (schématisées en 18) interposées axialement entre le carter 1 et l'organe fixe ou déplaçable auquel il est fixé (par exemple entre le bord de son oeillet 13 et l'élément d'accouplement qui est engagé dans celui-ci) afin de mesurer l'effort axial auquel est soumis ledit carter 1 et qui est représentatif de l'effort axial auquel est soumise la tige d'actionneur 6, ou bien de la même manière entre la tige d'actionneur 6 et l'organe respectif déplaçable ou fixe auquel elle est fixée (par exemple entre le bord de son oeillet 16 et l'élément d'accouplement qui est engagé dans celui-ci) afin de mesurer directement l'effort axial auquel est soumise la tige d'actionneur 6 ; on peut également, de manière préférée, avoir recours, en lieu et place de la chape traditionnellement prévue sur le carter, à un arbre creux (non représenté) d'accouplement calibré (ou chape calibrée) couramment disponible dans le commerce (par exemple ceux commercialisés par la société FGP Sensors) qui délivrent un signal électrique représentatif de l'effort axial subi par cet arbre creux, et donc représentatif de l'effort axial subi par la tige d'actionneur 6 ; la mise en place d'un tel capteur est un impératif de sécurité afin d'éviter une surcharge de l'effort supporté par la tige, avec mise en oeuvre d'un seuil de limitation d'effort réglé sur une valeur inférieure à l'effort maximum supportable par la tige d'actionneur et prédéterminée en relation avec le degré de sécurité choisi (par exemple de l'ordre de 20 à 30 dans le domaine aéronautique) : de ce fait, l'information d'effort axial subi par la tige d'actionneur 6 est déjà disponible et ne nécessite pas l'ajout de matériel.

L'apparition d'un grippage entraîne un accroissement de l'intensité du courant d'alimentation des enroulements inducteurs et/ou une réduction, pour une intensité donnée, de l'effort de la tige d'actionneur.

Pour exploiter cette caractéristique, on procède ensuite, dans une étape b), au calcul, à partir des mesures précitées, du rapport

$$\eta_1 = [\text{effort axial auquel est soumise la tige d'actionneur 6 / couple moteur}]$$

qui est par conséquent représentatif du rendement global de l'actionneur et est représentatif de son état présent par référence à des couples de valeurs intensité/couple moteur prédéterminés pour des actionneurs sains.

Enfin, on génère une évaluation de l'état de santé présent de l'actionneur qui est basée sur l'état présent de l'actionneur déterminé comme indiqué ci-dessus ainsi éventuellement que sur d'autres informations complémentaires telles des états antérieurs de l'actionneur tenus en mémoire qui peuvent éventuellement tenir lieu de la référence citée plus haut (soit qu'il s'agisse de mesures individuelles, soit qu'il s'agisse d'une moyenne de mesures antérieures) et/ou sur des paramètres extérieurs (par exemple température, vitesse de l'avion dans le contexte d'une telle application,...).

Les étapes qui viennent d'être commentées peuvent avantageusement être complétées par des étapes complémentaires propres à fournir des informations additionnelles qui, certes s'avèrent redondantes, mais qui de ce fait même améliorent l'aspect sécuritaire du diagnostic rendu sur l'état de santé de l'actionneur.

Ainsi, il peut être avantageux de prévoir que :

- à l'étape a) précitée, on mesure en outre un couple représentatif du couple d'antirotation entre les moyens 17 de blocage en rotation et la tige d'actionneur 6 ; on peut à cet effet interposer des jauges de contrainte (schématisées en 19) transversalement entre l'extrémité 11 de la clavette 10 encastrée dans le carter 1 et le logement d'encastrement prévu à cet effet dans le carter 1 (les jauges pouvant par exemple aisément être collées sur les faces externes latérales de ladite extrémité 11 de la clavette 10 ; et
- à l'étape b) précitée, on calcule en outre le rapport

$$\eta_2 = [\text{couple d'antirotation / couple moteur}]$$

qui est représentatif de l'état des paliers 3 de montage à rotation de l'écrou 2 rotatif sur le carter 1.

Egalement, il peut être avantageux de prévoir, soit isolément, soit en combinaison avec la détermination du rapport $\eta_2$, que :

- à l'étape a) précitée, on mesure en outre un couple représentatif du couple d'antirotation entre les moyens 17 de blocage en rotation et la tige d'actionneur 6, par exemple dans les conditions exposées ci-dessus ; et
- à l'étape b) précitée, on calcule en outre le rapport

$$\eta_3 = [\text{couple d'antirotation / effort axial auquel est soumise la tige d'actionneur 6}]$$

qui est représentatif de l'état des moyens 7, 9 d'engrènement hélicoïdaux axiaux coopérants respectifs dudit écrou 2 et de ladite tige d'actionneur 6.

La connaissance des rapports supplémentaires précités $\eta_2$ et/ou $\eta_3$ permet de consolider des aspects de sécurité, mais permet aussi d'apporter des éléments de localisation des défauts ou pannes, ce qui peut s'avérer important pour faciliter et/ou accélérer la maintenance.

Les diverses mesures qui sont effectuées dans le cadre du procédé de l'invention se traduisent par la génération de signaux électriques respectifs qui, après mise en forme et notamment numérisation, peuvent être traités de toute façon appropriée soit in situ, soit de façon délocalisée pour délivrer l'information requise sur l'état de santé de l'actionneur.

La mise en oeuvre du procédé de l'invention qui vient d'être exposé peut donner lieu à de nombreuses variantes, se traduisant par de nombreuses variantes d'aménagement de l'actionneur.

Ainsi, l'actionneur électromécanique du type rotolinéaire qui a été pris plus spécifiquement en considération dans ce qui précède est du type à entraînement direct comprenant au moins un enroulement inducteur 4 électrique qui est logé fixe dans le carter 1 et qui est propre à engendrer un champ tournant ; l'écrou 2 (ou les écrous) est disposé coaxialement à l'enroulement inducteur 4 et à l'intérieur de celui-ci et est équipé d'aimants, typiquement d'aimants permanents, qui sont entraînés en rotation par le champ tournant et par l'intermédiaire desquels l'écrou 2 est lui-même entraîné en rotation. Il s'agit du type d'actionneur qui semble devoir être plus largement visé par le procédé de l'invention. Cependant, le procédé de l'invention peut trouver une application tout aussi intéressante dans le cas d'actionnéurs électromécaniques du type rotolinéaire du type à entraînement indirect avec interposition d'une transmission, notamment d'un réducteur.

Il est également avantageux de prévoir que les paliers 3 de montage à rotation de l'écrou 2 sur le carter 1 soient des paliers à roulements, soit à billes, soit à rouleaux.

Les moyens 7, 9 d'engrènement hélicoïdaux axiaux accouplant l'écrou 2 et la tige d'actionneur 6 peuvent être constitués par des filetages normaux respectivement 7 et 9 usinés sur les faces en vis-à-vis de l'écrou 2 et de la tige d'actionneur 6, respectivement. Cependant, il peut s'avérer d'un intérêt particulier, pour réduire les frottements, que les moyens 7, 9 d'engrènement hélicoïdaux axiaux accouplant l'écrou 2 et la tige d'actionneur 6 soient formés d'une vis à roulements.

**Revendications**

**1.** Procédé de surveillance du rendement d'un actionneur électromécanique du type rotolinéaire aux fins de détection d'un grippage graduel dudit actionneur, ledit actionneur comprenant :

- un carter (1),
- des moyens moteurs (M) électriques d'entraînement en rotation incluant au moins un enroulement inducteur (4).
- au moins un écrou (2) supporté à rotation dans des paliers (3) dudit carter (1) et entraîné en rotation par lesdits moyens moteurs (M),
- au moins une tige d'actionneur (6) disposée coaxialement audit écrou (2), ledit écrou (2) et ladite tige d'actionneur (6) étant accouplés en rotation par des moyens (7, 9) d'engrènement hélicoïdaux axiaux,
- des moyens (17) de blocage en rotation de ladite tige d'actionneur (6) par rapport au carter (1) de manière que la rotation dudit écrou (2) se traduise par un déplacement linéaire de ladite tige d'actionneur (6),
- un moyen (13) prévu sur le carter (1) pour la fixation du carter (1) à un organe fixe ou déplaçable, et
- un moyen (16) prévu sur ladite tige d'actionneur (6) pour la fixation de l'extrémité (15) libre de ladite tige d'actionneur (6) à un organe respectivement déplaçable ou fixe,

ce procédé comprenant les étapes suivantes :

a)

- on mesure l'intensité du courant électrique d'alimentation dudit enroulement inducteur (4), ladite intensité étant représentative du couple moteur, et
- on mesure un effort représentatif de l'effort axial auquel est soumise ladite tige d'actionneur (6),

b) on calcule, à partir de ces mesures, le rapport [effort axial auquel est soumise ladite tige d'actionneur / couple moteur] qui est représentatif du rendement global de l'actionneur et représentatif de l'état présent de l'actionneur,
c) puis on génère une évaluation de l'état de santé présent de l'actionneur qui est basée sur l'état présent de l'actionneur et éventuellement sur des états antérieurs de l'actionneur tenus en mémoire et/ou sur des paramètres extérieurs,

**caractérisé en ce qu'**à l'étape a) on mesure en outre un couple représentatif du couple d'antirotation entre lesdits moyens (17) de blocage en rotation et ladite tige d'actionneur (6), et **en ce qu'**à l'étape b) on calcule en outre le rapport [couple d'antirotation / couple moteur], qui est représentatif de l'état des paliers (3) de montage à rotation dudit écrou (2) sur le carter (1), et/ou le rapport [couple d'antirotation / effort axial auquel est soumise la tige d'actionneur], qui est représentatif de l'état des moyens (7, 9) d'engrènement hélicoïdaux axiaux coopérants respectifs dudit écrou (2) et de ladite tige d'actionneur (6).

**2.** Procédé selon la revendication 1, **caractérisé en ce que** l'actionneur électromécanique du type rotolinéaire est du type à entraînement direct comprenant au moins un enroulement inducteur (4) électrique qui est logé fixe dans le carter (1) et qui est propre à engendrer un champ tournant et **en ce que** ledit au moins un écrou (2) est disposé coaxialement audit enroulement inducteur (4) et est équipé d'aimants.

**3.** Procédé selon l'une quelconque des revendications 1 et 2, **caractérisé en ce que**, pour mesurer le couple d'antirotation, on interpose au moins une jauge de contrainte (19) transversalement entre lesdits moyens (17) de blocage en rotation et ladite tige d'actionneur (6).

**4.** Procédé selon l'une quelconque des revendications 1 à 3, **caractérisé en ce que** le moyen de fixation prévu sur le carter (1) et/ou ladite tige d'actionneur (6) est du type d'une chape et **en ce qu'**on interpose au moins une jauge de contrainte (18) axialement entre ladite chape et l'organe respectif fixe ou déplaçable auquel elle est fixée afin de mesurer l'effort axial auquel est soumise ladite chape et qui est représentatif de l'effort axial auquel est soumise ladite tige d'actionneur (6).

5. Procédé selon l'une quelconque des revendications 1 à 4, **caractérisé en ce que**, pour mesurer l'effort représentatif de l'effort axial auquel est soumise la tige d'actionneur (6), le moyen de fixation prévu sur le carter (1) ou ladite tige d'actionneur (6) est un arbre creux.

6. Procédé selon l'une quelconque des revendications 1 à 5, **caractérisé en ce que** les paliers (3) de montage à rotation dudit écrou (2) sur le carter (1) sont des paliers à roulements.

7. Procédé selon l'une quelconque des revendications 1 à 6, **caractérisé en ce que** les moyens (7, 9) d'engrènement hélicoïdaux axiaux accouplant ledit écrou (2) et ladite tige d'actionneur (6) comprennent une vis à roulements.

8. Procédé selon l'une quelconque des revendications 2 à 7, **caractérisé en ce que** ledit écrou (2) est unique et est disposé coaxialement intérieurement audit enroulement inducteur (4) et **en ce que** ladite tige d'actionneur (6) est unique et est disposée intérieurement et coaxialement audit écrou (2).

9. Procédé selon l'une quelconque des revendications 2 à 8, **caractérisé en ce que** lesdits moyens (17) de blocage en rotation de ladite tige d'actionneur (6) par rapport au carter (1) comprennent une clavette (10) ancrée de façon fixe dans le carter (1) et engagée à libre coulissement dans un alésage (6a) axial de ladite tige d'actionneur (6).

## Patentansprüche

1. Verfahren zur Überwachung der Leistung eines elektromechanischen Stellantriebs vom schwenklinearen Typ zur Erfassung eines allmählichen Festfressens des Stellantriebs, wobei der Stellantrieb enthält:

   - ein Gehäuse (1),
   - elektrische Drehantriebseinrichtungen (M), die mindestens eine Feldwicklung (4) enthalten,
   - mindestens eine Mutter (2), die drehbar in Lagern (3) des Gehäuses (1) gehalten und von den Antriebseinrichtungen (M) in Drehung versetzt wird,
   - mindestens eine koaxial zur Mutter (2) angeordnete Stellantriebstange (6), wobei die Mutter (2) und die Stellantriebstange (6) durch axiale schraubenförmige Eingriffseinrichtungen (7, 9) drehgekoppelt werden,
   - Einrichtungen (17) zur Drehsperre der Stellantriebstange (6) bezüglich des Gehäuses (1), damit die Drehung der Mutter (2) sich durch eine lineare Verschiebung der Stellantriebstange (6) äußert,
   - eine am Gehäuse (1) vorgesehene Einrichtung (13) zur Befestigung des Gehäuses (1) an einem ortsfesten oder verschiebbaren Element, und
   - eine auf der Stellantriebstange (6) vorgesehene Einrichtung (16) zur Befestigung des freien Endes (15) der Stellantriebstange (6) an einem verschiebbaren bzw. ortsfesten Element,
   wobei dieses Verfahren die folgenden Schritte enthält:

   a)

   - die Stärke des elektrischen Speisestroms der Feldwicklung (4) wird gemessen, wobei die Stärke für das Antriebsdrehmoment repräsentativ ist, und
   - es wird eine für die axiale Kraft, der die Stellantriebstange (6) ausgesetzt ist, repräsentative Kraft gemessen,

   b) ausgehend von diesen Messwerten wird das Verhältnis [axiale Kraft, der die Stellantriebstange ausgesetzt ist / Antriebsdrehmoment] gemessen, das für die globale Leistung des Stellantriebs und für den aktuellen Zustand des Stellantriebs repräsentativ ist,
   c) dann wird eine Auswertung des aktuellen Gesundheitszustands des Stellantriebs erzeugt, die auf dem aktuellen Zustand des Stellantriebs und ggf. auf gespeicherten früheren Zuständen des Stellantriebs und/ oder auf externen Parametern basiert,

   **dadurch gekennzeichnet, dass** im Schritt a) außerdem ein Drehmoment gemessen wird, das für das Antirotationsmoment zwischen den Drehsperre-Einrichtungen (17) und der Stellantriebstange (6) repräsentativ ist, und dass im Schritt b) außerdem das Verhältnis [Antirotationsmoment / Antriebsdrehmoment], das für den Zustand der Lager (3) zur Drehmontage der Mutter (2) auf das Gehäuse (1) repräsentativ ist, und/oder das Verhältnis [Antirotationsmoment / axiale Kraft, der die Stellantriebstange ausgesetzt ist] berechnet wird, das für den Zustand der zusammenwirkenden axialen schraubenförmigen Eingriffseinrichtungen (7, 9) der Mutter (2) bzw. der Stellantriebsstange (6) repräsentativ ist.

2. Verfahren nach Anspruch 1, **dadurch gekennzeichnet, dass** der elektromechanische Stellantrieb vom schwenklinearen Typ von der Art mit direktem Antrieb ist, der mindestens eine elektrische Feldwicklung (4) enthält, die ortsfest im Gehäuse (1) untergebracht ist und ein drehendes Feld erzeugen kann, und dass die mindestens eine Mutter (2) koaxial zur Feldwicklung (4) angeordnet und mit Magneten ausgestattet ist.

3. Verfahren nach einem der Ansprüche 1 und 2, **dadurch gekennzeichnet, dass** zur Messung des Antirotationsmoments mindestens ein Dehnungsmesser (19) quer zwischen den Drehsperre-Einrichtungen (17) und der Stellantriebstange (6) eingefügt wird.

4. Verfahren nach einem der Ansprüche 1 bis 3, **dadurch gekennzeichnet, dass** die auf dem Gehäuse (1) und/oder der Stellantriebstange (6) vorgesehene Befestigungseinrichtung vom Typ eines Gabelkopfs ist, und dass mindestens ein Dehnungsmesser (18) axial zwischen den Gabelkopf und dem ortsfesten bzw. verschiebbaren Element eingefügt wird, an dem er befestigt ist, um die axiale Kraft zu messen, der der Gabelkopf ausgesetzt ist und die für die axiale Kraft repräsentativ ist, der die Stellantriebstange (6) ausgesetzt ist.

5. Verfahren nach einem der Ansprüche 1 bis 4, **dadurch gekennzeichnet, dass** zur Messung der für die axiale Kraft, der die Stellantriebstange (6) ausgesetzt ist, repräsentativen Kraft die auf dem Gehäuse (1) oder der Stellantriebstange (6) vorgesehene Befestigungseinrichtung eine Hohlwelle ist.

6. Verfahren nach einem der Ansprüche 1 bis 5, **dadurch gekennzeichnet, dass** die Lager (3) zur Drehmontage der Mutter (2) auf dem Gehäuse (1) Kugellager sind.

7. Verfahren nach einem der Ansprüche 1 bis 6, **dadurch gekennzeichnet, dass** die axialen schraubenförmigen Eingriffseinrichtungen (7, 9), die die Mutter (2) und die Stellantriebstange (6) koppeln, eine Kugellagerschraube enthalten.

8. Verfahren nach einem der Ansprüche 2 bis 7, **dadurch gekennzeichnet, dass** die Mutter (2) einzig und koaxial innerhalb der Feldwicklung (4) angeordnet ist, und dass die Stellantriebstange (6) einzig und innerhalb der und koaxial zur Mutter (2) angeordnet ist.

9. Verfahren nach einem der Ansprüche 2 bis 8, **dadurch gekennzeichnet, dass** die Drehsperre-Einrichtungen (17) der Stellantriebstange (6) bezüglich des Gehäuses (1) einen Keil (10) enthalten, der ortsfest im Gehäuse (1) verankert und frei gleitend in eine axiale Bohrung (6a) der Stellantriebstange (6) eingeführt ist.

## Claims

1. Method for monitoring the output of an electromechanical actuator of the rotary-linear type in order to detect gradual seizing of said actuator, said actuator comprising:

   - a casing (1),
   - rotary electric motor means (M) including at least one field winding (4),
   - at least one nut (2) rotatably supported in bearings (3) of said casing (1) and driven in rotation by said motor means (M),
   - at least one actuator rod (6) arranged coaxially with the nut (2), said nut (2) and said actuator rod (6) being coupled in rotation by axial helical meshing means (7, 9),
   - means (17) for locking the actuator rod (6) in rotation relative to the casing (1) so that the rotation of the nut (2) leads to a linear displacement of the actuator rod (6),
   - means (13) provided on the casing (1) for fastening the casing (1) to a fixed or displaceable component, and
   - means (16) provided on the actuator rod (6) for fastening the free end (15) of the actuator rod (6) to a component that is respectively displaceable or fixed,
   this method comprising the following steps:

a)

- the intensity of the electric current powering the field winding (4) is measured, said intensity being representative of the motor torque, and
- a stress representative of the axial stress to which the actuator rod (6) is subjected, is measured,

b) from these measurements, the [axial stress to which the actuator rod is subjected/motor torque] ratio, which is representative of the overall output of the actuator and representative of the present state of the actuator, is calculated,

c) an evaluation of the present state of health of the actuator is produced that is based on the present state of the actuator and optionally on previous stored states of the actuator and/or on external parameters,

**characterized in that** in step a) a torque representative of the antirotation torque between the means (17) for locking in rotation and the actuator rod (6) is also measured, and **in that** in step b) the [antirotation torque/motor torque] ratio, which is representative of the state of the bearings (3) for mounting the nut (2) rotatably on the casing (1), is also calculated, and/or the [antirotation torque/axial stress to which the actuator rod is subjected] ratio, which is representative of the state of the respective cooperating axial helical meshing means (7, 9) of said nut (2) and said actuator rod (6), is also calculated.

2. Method according to claim 1, **characterized in that** the electromechanical actuator of the rotary-linear type is of the direct-drive type comprising at least one electric field winding (4) that is housed fixed in the casing (1) and is capable of generating a rotating field and **in that** the at least one nut (2) is arranged coaxially with the field winding (4) and is equipped with magnets.

3. Method according to any one of claims 1 and 2, **characterized in that**, in order to measure the antirotation torque, at least one strain gauge (19) is interposed transversally between the means (17) for locking in rotation and the actuator rod (6).

4. Method according to any one of claims 1 to 3, **characterized in that** the fastening means provided on the casing (1) and/or the actuator rod (6) is of the clevis type and **in that** at least one strain gauge (18) is interposed axially between said clevis and the respective fixed or displaceable component to which it is fastened in order to measure the axial stress to which said clevis is subjected and which is representative of the axial stress to which the actuator rod (6) is subjected.

5. Method according to any one of claims 1 to 4, **characterized in that**, in order to measure the stress representative of the axial stress to which the actuator rod (6) is subjected, the fastening means provided on the casing (1) or the actuator rod (6) is a hollow shaft.

6. Method according to any one of claims 1 to 5, **characterized in that** the bearings (3) for mounting the nut (2) rotatably on the casing (1) are roller bearings.

7. Method according to any one of claims 1 to 6, **characterized in that** the axial helical meshing means (7, 9) coupling the nut (1) and the actuator rod (6) comprise a roller screw.

8. Method according to any one of claims 2 to 7, **characterized in that** the nut (2) is single and is arranged coaxially inside the field winding (4) and **in that** the actuator rod (6) is single and is arranged inside and coaxially with the nut (2).

9. Method according to any one of claims 2 to 8, **characterized in that** the means (17) for locking the actuator rod (6) in rotation relative to the casing (1) comprise a key (10) anchored in a fixed manner in the casing (1) and engaged sliding freely in an axial bore (13) in the actuator rod(6).

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005024273 A